# EUROPÄISCHE PATENTSCHRIFT

(11) **EP 1 147 025 B1**
(45) Veröffentlichungstag und Bekanntmachung des Hinweises auf die Patenterteilung: **07.05.2003**
(21) Anmeldenummer: 00904815.8
(22) Anmeldetag: 03.01.2000
(51) Int. Cl.: B60K 35/00

(54) **VERFAHREN ZUM DARSTELLEN EINES ANZEIGEINSTRUMENTS DURCH EINE PIXEL-MATRIX-ANZEIGE**
METHOD FOR REPRESENTING A DISPLAY INSTRUMENT BY A PIXEL-MATRIX DISPLAY
PROCEDE DE REPRESENTATION D'UN INSTRUMENT INDICATEUR PAR UN AFFICHAGE A MATRICE DE PIXELS

(30) Priorität: 27.01.1999 DE 19903201
(43) Veröffentlichungstag der Anmeldung: 24.10.2001
(73) Patentinhaber: SIEMENS AKTIENGESELLSCHAFT, 80333 München (DE)
(72) Erfinder: KINZLER, Hans, D-93049 Regensburg (DE)
(86) Internationale Anmeldenummer: DE0000016
(87) Internationale Veröffentlichungsnummer: WO00044581

(56) Entgegenhaltungen:
- DE-A- 19 708 610
- DE-A- 19 755 470
- DE-U- 29 816 517

## Beschreibung

Die Erfindung betrifft ein Verfahren zum Darstellen eines Anzeigeinstruments durch eine Pixel-Matrix-Anzeige.

Aus der Offenlegungsschrift DE 197 08 610 A1 ist eine aus organischen LED (OLED) gebildete Pixel-Matrix-Anzeige bekannt, auf der Anzeigeinstrumente in einem Kraftfahrzeug konfigurierbar sind. Solche Anzeigeinstrumente wirken auf einen Betrachter gegenüber herkömmlichen Analoginstrumenten künstlich.

Dasselbe gilt für das in der Offenlegungsschrift DE 197 55 470 A1 beschriebene Anzeigesystem. Bei diesem werden Informationen mit Hilfe von wenigstens einem Zeiger und mindestens einer Skala auf einem Bildschirm dargestellt.

Die Offenlegungsschrift DE 197 53 928 A1 betrifft eine Anzeigevorrichtung für ein Kraftfahrzeug mit einem von einem Meßwerk angetriebenen Zeiger. Hinter der Bewegungsebene des Zeigers ist ein Bildschirm angeordnet. Der Bildschirm wird von einer Blende abgedeckt, die sich öffnen lässt, wenn veränderbare Information auf dem Bildschirm einem Betrachter dargeboten werden soll. Auf der Blende ist eine Skalenteilung für den Zeiger aufgedruckt. Die Skalenteilung wird von dem Zeiger überstrichen. Alternativ kann auf dem Bildschirm bei geöffneter Blende eine Skalierung dargestellt werden. Diese Anzeigevorrichtung benötigt zusätzlich zum Bildschirm eine verhältnismäßig aufwendige Mechanik, um eine Positionierung des Zeigers über dem Bildschirm zuzulassen.

Aus der Offenlegungsschrift DE 42 44 507 A1 ist ein Verfahren zur Erzeugung der Farb- und Helligkeitswerte von Bildpunkten auf einem Bildschirm für die Darstellung mehrerer dreidimensionaler geometrischer Objekte bekannt, die sich teilweise überlappen. Dabei werden Bildpunkte in Unterbildpunkte aufgeteilt und Unterbildmasken für jedes der Objekte erzeugt. Die Farb- und Helligkeitswerte des Gesamtbildpunktes werden durch Aufaddieren der Beiträge der Unterbildpunkte berechnet. Allerdings erfordern die nötigen Berechnung eine erhebliche Rechenleistung.

Es ist ein Ziel der Erfindung, ein Verfahren zum Darstellen eines Anzeigeinstruments bereitzustellen, das die Vorteile eines Displays nutzt und gleichzeitig eine gute Ablesbarkeit und einen qualitativ hochwertigen Eindruck gewährleistet.

Dieses Ziel wird durch ein Verfahren erreicht, wie es in den unabhängigen Patentansprüchen definiert ist. Vorteilhafte Weiterbildungen der Erfindung sind in den Unteransprüchen angegeben.

Da die Anzeigefläche von einem Display gebildet ist, kann die Art und das Aussehen eines von der Anzeigefläche wiedergegebenen Anzeigeinstruments durch Software gestaltet werden. Bei der Fahrzeugherstellung kann dieselbe Anzeigevorrichtung für unterschiedliche Fahrzeugmodelle mit unterschiedlichen oder unterschiedlich gestalteten Anzeigeinstrumenten eingesetzt werden. Ferner besteht die Möglichkeit, für einen Fahrzeugbenutzer Konfigurationsmöglichkeiten bezüglich der Art der darzustellenden Anzeigeinstrumente und des Designs bereitzustellen.

Für die Anzeige wird'eine Zeigerdarstellung eingesetzt. Besonders scharfe Begrenzungslinien für den Zeiger werden durch ein Anti-aliasing-Verfahren erzeugt. Damit werden Stufenlinien vermieden, die auf die begrenzte Auflösung eines Displays zurückzuführen sind. Hierzu wird ein Pixel, das von einer Begrenzungslinie des Zeigers erfaßt wird und nur teilweise innerhalb des Zeigers liegt, in seiner Leuchtstärke reduziert. Die Reduzierung der Leuchtstärke betrifft im gleichen Maße alle angesteuerten Farben des Pixels.

Um mit einer kostengünstigen Steuerung des Displays eine verzögerungsfreie Darstellung eines sich bewegenden Zeigers zu ermöglichen, kann der Zeiger in einer Vielzahl von möglichen Positionen gespeichert werden. Zur Darstellung einer konkreten Zeigerposition muß keine Neuberechnung des Zeigers in der Anzeigefläche erfolgen. Es müssen lediglich die Werte für den sich bewegenden Zeiger aus dem Speicher gelesen werden.

Obwohl der Zeiger auch durch eine Bitmap-Grafik verkörpert werden kann, wird eine Vektordarstellung bevorzugt.

Weitere Vorteile, Merkmale und Anwendungsmöglichkeiten der Erfindung ergeben sich aus der nachfolgenden Beschreibung von Ausführungsbeispielen in Verbindung mit den Zeichnungen. Es zeigen:
Figur 1 eine Anzeigevorrichtung mit drei Anzeigeinstrumenten,
Figur 2 den Aufbau eines Zeigers,
Figur 3 ein Anti-aliasing-Verfahren für einen Zeiger,

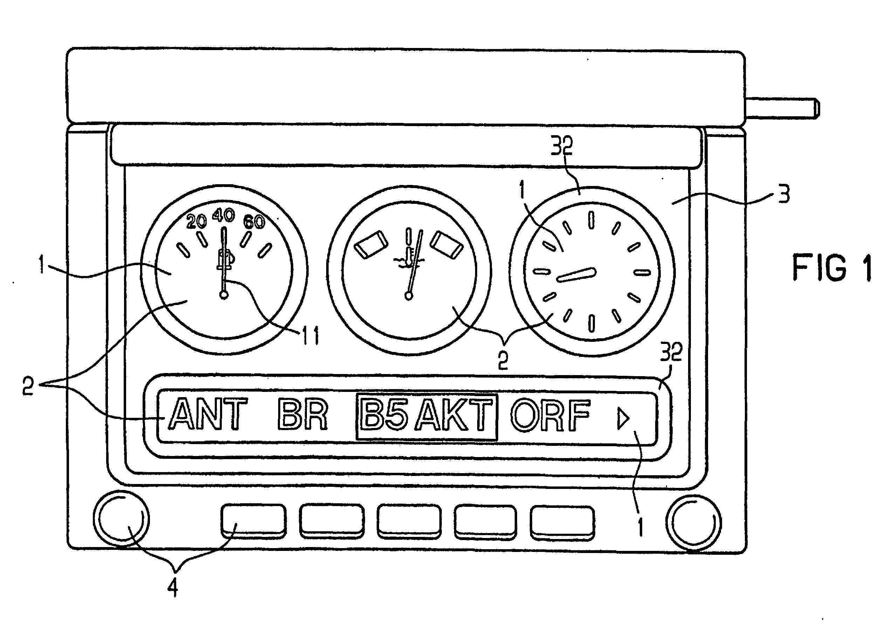

Die in Figur 1 veranschaulichte Anzeigevorrichtung weist vier Anzeigeflächen 1 auf, die durch ein einziges TFT-Display 2 gebildet sind. Das Display 2 wird von einer Blende 3 mit drei runden und einer rechteckförmigen Öffnung abgedeckt. Durch die Öffnungen oder Ausnehmungen der Blende 3 sind die Anzeigeflächen 1 erkennbar. Die Öffnungen der Blende sind durch transparente Kunststoffgläser verschlossen. Die Kunststoffgläser sind von metallischen Einsätzen 32 oder Fassungen gehalten.

In den runden Öffnungen der Blende 3 sind drei Anzeigeinstrumente mit Zeigern dargestellt, nämlich eine Tankuhr, eine Kühlmitteltemperaturanzeige und eine Uhr. In der rechteckförmigen Öffnung sind Kürzel für Radiosender angegeben, die über ein Bedienelement 4 ausgewählt werden können.

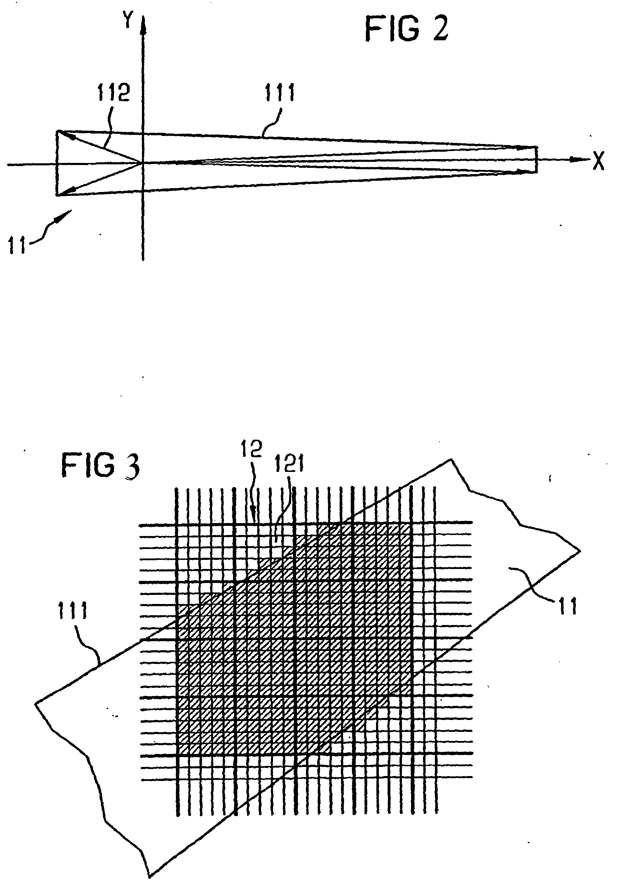

Figur 2 veranschaulicht die Bildung eines Zeigers 11. Der Zeiger 11 ist als Objekt definiert und wird als solches vom Display auf der Anzeigefläche wiedergegeben. Der Zeiger ist aus vier Vektoren 112 und aus vier Begrenzungslinien 111 gebildet.

Wenn der Zeiger 11 für einen bestimmten Winkel dargestellt werden soll oder in einem Anzeigeninstrument um einen virtuellen Drehpunkt gedreht werden soll, werden die Parameter für die Vektoren und die Begrenzungslinien neu berechnet. Diese Parameter werden zum Zeichnen des Zeigers 11 benutzt.

Der Zeiger 11 ist ein Objekt auf dem Display. Dieses wird für alle vorgesehenen Anzeigepositionen berechnet und in einem Speicher gespeichert. Für eine bestimmte Zeigerposition wird der zugehörige Zeiger aus dem Speicher gelesen und die Hintergrunddarstellung, bei der es sich um ein Bitmap-Bild handelt, überschrieben.

Figur 3 veranschaulicht das Anti-aliasing-Verfahren, mit dem die Begrenzungslinien 111 oder Kanten des Zeigers 11 besonders scharf, also ohne erkennbare Stufen, dargestellt werden können. Dieses Verfahren wird in diesem Beispiel lediglich für den Zeiger 11 und nicht für die restliche Anzeigefläche angewendet.

Eine ideale Begrenzungslinie 111 erfaßt eine Vielzahl von Pixeln 12 eines Displays. Regelmäßig liegt nur ein Teil der von der idealen Begrenzungslinie 111 durchquerten Pixel 12 innerhalb des Zeigers. Ein solches nur teilweise erfaßte Pixel kann aber physikalisch nicht in mehrere Teile unterteilt werden. Es entsteht daher bei einer konventionellen Ansteuerung der auf der Begrenzungslinie liegenden Pixel 12 eine unerwünschter Weise gestufte Kante oder Begrenzungslinie.

Um diesen ungünstigen Eindruck für einen Betrachter zu vermeiden, werden diejenigen Pixel, die sich nicht vollständig sondern nur teilweise innerhalb der Begrenzungslinien 111 befinden, mit einer geringeren Leuchtstärke oder Lichtintensität angesteuert. Dabei wird jede anzusteuernde Farbe gleichermaßen in ihrer Helligkeit oder Leuchtstärke reduziert.

Als Maß für die Reduktion der Leuchtstärke eines Pixels 12 dient das Verhältnis zwischen demjenigen Teil des Pixels 12, der von der Begrenzungslinie 12 erfaßt wird, gegenüber dem restlichen Pixel oder dem gesamten Pixel.

Dieses Verhältnis wird dadurch ermittelt, daß ein Pixel 12 rein mathematisch in eine Vielzahl von Punkten 121 unterteilt wird. In diesem Beispiel ist ein Pixel 12 in 5*5=25 Punkte 121 unterteilt. Die Leuchtstärke für ein bestimmtes Pixel ergibt sich aus der Anzahl der Punkte 121 des Pixels, die sich innerhalb oder auf der Begrenzungslinie 111 befinden.

Im mit dem Pfeil bezeichneten Pixel 12 sind 8 Punkte 121 von der Begrenzungslinie 111 erfaßt. Die Leuchtstärke dieses Pixels sollte daher nur 8/25 eines vollständig innerhalb der Begrenzungslinien 111 befindlichen Pixels betragen. Die Leuchtstärke der angesteuerten Farben dieses Pixels 12 wird jeweils auf diesen Wert reduziert.

Dieses Verfahren eignet sich insbesondere auch für eine Ansteuerung eines Displays mit analogen Signalen (RGB).

## Patentansprüche

1. Verfahren zum Darstellen eines Anzeigeinstruments durch eine Pixel-Matrix-Anzeige, mit den Schritten:
- eine Skala oder ein Symbol wird auf einer durch die Pixel-Matrix-Anzeige gebildeten Anzeigefläche (1) dargestellt,
- ein Zeiger (11) wird in der Anzeigefläche (1) dargestellt,
**dadurch gekennzeichnet, daß** der Zeiger (11) mit scharfen Begrenzungslinien (111) dargestellt wird, indem Pixel (12), die nicht vollständig innerhalb einer idealen, geradlinigen Begrenzungslinie (111) des Zeigers (11) liegen, weniger leuchtstark dargestellt werden, als Pixel (12), die vollständig innerhalb der Begrenzungslinien (111) liegen.

2. Verfahren nach dem vorhergehenden Anspruch, **dadurch gekennzeichnet, daß** ein Zeiger (11) aus vier Vektoren (112) und vier Begrenzungslinien (111) gebildet wird.

3. Verfahren nach dem vorhergehenden Anspruch, **dadurch gekennzeichnet, daß** die Beleuchtungsstärke für jede angesteuerte Grundfarbe eines Pixels (12) entsprechend dem Verhältnis zwischen dem Flächenanteil des Pixels innerhalb der Begrenzungslinie (111) und außerhalb der Begrenzungslinie herabgesetzt wird.

4. Verfahren nach einem der vorhergehenden Verfahrensansprüche, **dadurch gekennzeichnet, daß** mögliche Stellungen des Zeigers (11) abgespeichert sind, und daß für eine Anzeige eine der abgespeicherten Stellungen des Zeigers ausgewählt und wiedergegeben wird.

## Claims

1. Method for representing a display instrument by a pixel-matrix display, having the following steps:
- a scale or a symbol is represented on a display area (1) formed by the pixel-matrix display,
- a pointer (11) is represented in the display area (1),
**characterized in that** the pointer (11) is represented with sharp boundary lines (111), by pixels (12) which do not lie completely within an ideal, rectilinear boundary line (111) of the pointer (11) being represented with a lower luminous intensity than pixels (12) which lie completely within the boundary lines (111).

2. Method according to the preceding claim, **characterized in that** a pointer (11) is formed from four vectors (112) and four boundary lines (111).

3. Method according to the preceding claim, **characterized in that** the illumination intensity for each driven primary colour of a pixel (12) is reduced in accordance with the ratio between the area proportion of the pixel within the boundary line (111) and outside the boundary line.

4. Method according to one of the preceding method claims, **characterized in that** possible positions of the pointer (11) are stored, and **in that**, for a display, one of the stored positions of the pointer is selected and reproduced.

## Revendications

1. Procédé de représentation d'un instrument indicateur au moyen d'une visualisation par matrice de pixels, comportant les pas :
- une graduation ou un symbole est représenté sur une surface de visualisation (1) réalisée au moyen de la visualisation par matrice de pixels,
- une aiguille (11) est représentée sur la surface de visualisation (1),
**caractérisé en ce que** l'aiguille (11) est représentée avec des lignes de délimitation (111) nettes, du fait que des pixels (12) qui ne sont pas situés en totalité dans les limites d'une ligne de délimitation (111) rectiligne idéale de l'aiguille (11) sont représentées d'une manière moins lumineuse que des pixels (12) qui sont situés en totalité dans les limites des lignes de délimitation (111).

2. Procédé suivant la revendication précédente, **caractérisé en ce qu'**une aiguille (11) est constituée de quatre vecteurs (112) et quatre lignes de délimitation (111).

3. Procédé suivant la revendication précédente, **caractérisé en ce que** l'intensité d'éclairage pour chaque couleur de base commandée d'un pixel (12) est réduite d'une manière correspondant au rapport entre la partie de surface du pixel située dans les limites de la ligne de délimitation (111) et celle située hors des limites de la ligne de délimitation.

4. Procédé suivant l'une des revendications de procédé précédentes, **caractérisé en ce que** des positions possibles de l'aiguille (11) sont rangées en mémoire et **en ce que**, pour une visualisation, l'une des positions rangées en mémoire de l'aiguille est sélectionnée et restituée.
